# EUROPEAN PATENT APPLICATION

(11) **EP 2 685 603 A1**
(43) Date of publication of application: **15.01.2014**
(21) Application number: 12754423.7
(22) Date of filing: 21.02.2012
(51) Int. Cl.: H02K 1/18, H02K 5/04

(54) **STATOR ANCHORING STRUCTURE AND DRIVE DEVICE**

(30) Priority: 09.03.2011 JP 2011051684
(71) Applicant: Yamaha Motor Electronics Co., Ltd., Shuchi-gun Shizuoka 437-0292 (JP)
(72) Inventor: SHIRAISHI, Tomonari, Shuchi-gun Shizuoka 437-0292 (JP); NAGATA, Toshihiko, Shuchi-gun Shizuoka 437-0292 (JP); OOTANI, Toshihide, Shuchi-gun Shizuoka 437-0292 (JP)
(74) Representative: Zimmermann, Tankred Klaus
(86) International application number: PCT/JP2012/001153
(87) International publication number: WO 2012/120800

(57) **Abstract**

A driving unit 1 includes a stator 13, a housing 3, and a spring pin 15. The housing 3 includes a tubular section 11 and a plate section 29. The tubular section 11 accommodating the stator 13 has a first groove on an inner wall 21 thereof. The plate section 29 has a flat plate shape substantially orthogonal to a central axis P of the tubular section 11, and projects from an outer surface of the tubular section 11. The first groove is disposed in a peripheral direction Q of the tubular section 11 within an area facing a joining portion B across the central axis P, in the joining portion B the tubular section 11 and the plate section 29 being joined.

## Description

### Technical Field

This invention relates to a stator fixation structure and a driving unit. More particularly, this invention is directed to techniques of fixing a stator to a housing.

### Background Art

Conventionally, a motor or a generator has been known including a stator, a rotor in the interior of the stator, and a case accommodating the stator and the rotor. The stator is fixed to the case by means of bolts or screws. See, for example, Japanese Patent Publication No. H06-70523A. Alternatively, as is also known, the stator may be adhered to the case via an adhesive.

### Summary of Invention

### Technical Problem

Examples of conventional art with the construction as above, however, have the following drawbacks. Fixing the stator to the case by means of bolts or the like takes much time for the assembly since the bolts require fastening upon fixing the stator. This may cause an inconvenience. Moreover, portions for fixing the stator by means of bolts or the like are required, and such portions may lead to another inconvenience in terms of a complex construction. On the other hand, fixation via an adhesive may lead to an inconvenience of increased time for assembly including a cure time for the adhesive. Moreover, the working efficiency easily decreases due to adhesion of the adhesive to a hand or the like of an operator. Thus, an inconvenience may also occur.

This invention has been made regarding the state of the art noted above, and its object is to provide a stator fixation structure and a driving unit with a simple construction allowing fixation of the stator in a shorter period of time.

### Solution to Problem

To fulfill the above object, this invention provides the following construction. One embodiment of this invention discloses a stator fixation structure. The stator fixation structure includes a stator; a housing including a tubular section with a first groove on an inner wall thereof, the stator being accommodated in the tubular section; and a fixing member configured to fix the stator to the housing, the fixing member being configured to be pressed into the first groove to press the stator against the inner wall of the tubular section. The housing further includes a plate section having a planar shape substantially orthogonal to a central axis of the tubular section and projecting from an outer surface of the tubular section. The first groove is disposed in a peripheral direction of the tubular section within an area facing a joining portion across the central axis, the tubular section and the plate section being joined at the joining portion.

In the stator fixation structure according to one embodiment of this invention, the stator is accommodated in the tubular section having the first groove formed on the inner wall thereof. The fixing member is pressed into the first groove. The fixing member presses against a part of an outer wall of the stator. Accordingly, the fixing member presses the stator (more strictly, a part opposite to the part of the outer wall of the stator) against the inner wall. A friction force is generated between the stator and the inner wall, and the friction force causes the stator to be held. As a result, a shifting the stator along the central axis of the tubular section may be suppressed suitably.

The stator fixation structure as above uses no bolt or the like for fixing the stator, thereby achieving a simple construction. In addition, the stator is fixed to the housing merely by pressing the fixing member into the first groove, resulting in an enhanced working efficiency. Also, the stator may be fixed in a shorter period of time.

The embodiment of this invention further includes a plate section projecting outwardly from the tubular section. As a result, the rigidity (strength) of the tubular section varies in accordance with positions of the tubular section along the peripheral direction. Specifically, a part of the tubular section joining to the plate section has a higher rigidity than the other part of the tubular section, thereby making it difficult to deform or bend the part under a load. The first groove mentioned above is disposed on an inner wall opposite to the inner wall corresponding to the joining portion of the tubular section and the plate section. Accordingly, an external surface (rear face) of the inner wall against which the stator is pressed corresponds to the joining portion (a back face of the inner wall corresponds to the joining portion). As noted above, the part of the tubular section with relatively higher rigidity receives the load of the stator, and, thus, it is difficult to deform the shape of the tubular section. Consequently, a radial shifting of the stator relative to the position may also be suppressed.

In the above-mentioned embodiment of this invention, the joining portion preferably overlaps the fixing member along the central axis. This leads to an overlap of the joining portion along the central axis and the inner wall receiving the load from the stator. As a result, the inner wall having the back face as the joining portion may receive the load from the stator. Consequently, a deformation of the tubular section may be suppressed accurately.

In the embodiment mentioned above of this invention, the joining portion is preferably disposed below an upper end surface of the tubular section along the central axis. This allows suitably suppressing the deformation of the tubular section.

In the embodiment mentioned above of this invention, the joining portion preferably has a length along the peripheral direction of the tubular section of one-fourth or more of an entire periphery of the tubular section. This allows enhancing the rigidity of the tubular section. In addition, a larger contact area of the stator and the inner wall can be obtained.

In the embodiment mentioned above of this invention, the fixing member preferably has a columnar shape and is preferably pressed into the first groove with a shaft axis of the fixing member being parallel to the central axis. Accordingly, a variation in force applied by the fixing member to the stator in accordance with positions of the fixing member along the central axis may be suppressed suitably.

In the embodiment mentioned above of this invention, the fixing member is preferably cylindrical. This allows a direction in which the fixing member presses the stator to conform to a radial direction from the first groove toward the central axis

In the embodiment mentioned above of this invention, the fixing member is preferably a spring pin with a slit formed therein. The spring pin is an elastic body. Consequently, a variation in size of the stator and/or the tubular section is absorbed to allow pressing of the stator against the inner wall suitably. Moreover, a smaller fixing member may be obtained by using the spring pin. This achieves a smaller first groove, allowing for a reduction in size of the tubular section.

In the embodiment above of this invention, it is preferable that the radial direction relative to the central axis through the shaft axis of the spring pin is substantially orthogonal to a direction of a line connecting the shaft axis to the slit. In other words, assuming that a direction orthogonal, as seen from the central axis, relative to a radial direction to the central axis through the shaft axis is a tangent line direction, a direction of a line connecting the shaft axis to the slit is substantially parallel to the tangent line. An elastic force generated by the spring pin may act on the stator accurately.

In the embodiment mentioned above of this invention, the fixing member preferably has a length shorter than that of the stator along the central axis. This avoids that the fixing member projects from the stator. Consequently, an interference between the fixing member and the stator or other elements can suitably be suppressed.

In the embodiment mentioned above of this invention, the stator includes a second groove on an outer wall thereof. The stator is accommodated in the tubular section such that the second groove faces the first groove. The fixing member is pressed into a gap formed by the first groove and the second groove. Such a configuration is preferable. The stator with the second groove may be pressed accurately by the fixing member. This ensures fixing the stator into the housing. In addition, suppression of the shifting the stator along the peripheral direction relative to the central axis may be achieved at the same time.

The embodiment mentioned above of this invention preferably includes a cover and an elastic member. The cover is coupled to the housing and blocks an opening of the tubular section. The elastic member is disposed between a top face of the stator and a rear face of the cover and presses the stator along the central axis and away from the cover. The elastic member presses the stator downwardly along the central axis to press the lower surface of the stator against the tubular section. This allows suppressing the shifting of the stator along the central axis.

In the embodiment mentioned above of this invention, the tubular section includes a plurality of bosses projecting radially and outwardly from an upper end surface thereof, for connecting the cover. The first groove is disposed adjacent to one of the bosses. This leads to at least increasing the strength of a part of the tubular section where the first groove is formed. Consequently, the deformation of the part of the tubular section where the first groove is formed may be suppressed suitably.

In the embodiment mentioned above of this invention, the top face of the stator projects above the upper end surface of the tubular section. The cover includes inside thereof a notch formed on an extension position of the first groove. An upper portion of the stator is partially accommodated inside the cover, facilitating size reduction. In addition, the cover includes inside thereof the notch, allowing the fixing member to project from the upper end surface of the tubular section.

Another embodiment mentioned of this invention discloses a driving unit including a motor configured to generate power, the motor including a rotor and a stator outside of the rotor; a housing including a tubular section, the motor being accommodated in the tubular section, the tubular section including a first groove on an inner wall thereof; and a fixing member configured to fix the stator to the housing, the fixing member being configured to be pressed into the first groove to press the stator against the inner wall of the tubular section. The housing further includes a plate section having a planar shape substantially orthogonal to a central axis of the tubular section and projecting from an outer surface of the tubular section. The first groove is disposed in a periphery direction of the tubular section within an area facing a joining portion across the central axis, the plate section and the tubular section being joined at the joining portion.

The driving unit according to the embodiment of this invention uses the stator fixation structure. This allows suitably suppressing the shifting of the stator along the central axis of the tubular section and radially relative to the central axis. Moreover, this achieves a simple structure of the driving unit. Furthermore, the stator may be fixed to the housing merely by pressing the fixing member into the first groove, leading to an enhanced working efficiency and an assembly in a shorter period of time. Accordingly, an efficient assembly of the driving unit can be achieved.

In the embodiment mentioned above of this invention, the driving unit is mountable on a bicycle. The housing further includes a crankshaft chamber into which a crankshaft of the bicycle is inserted. The motor generates power for assisting a pressure on pedals coupled to the crankshaft. Such a construction is preferable. The pedals of the bicycle often may contact the ground first. The crankshaft is coupled the pedals. Accordingly, in the driving unit mounted on the bicycle, a shock may be given directly to the housing, and may be given indirectly to the inside of the driving unit via the housing. In addition, a shock may be given directly to the inside the driving unit (crankshaft chamber) via the crankshaft. In the latter case, a stronger force is applied to the stator along the central axis. The driving unit of the embodiment of this invention, however, uses the stator fixation structure mentioned above, and, thus, the shifting or the disconnection of the stator along the central axis may be suitably suppressed. Consequently, the driving unit of this invention is suitable to be applied to bicycles.

In the embodiment mentioned above of this invention, the plate section is preferably a wall for forming the crankshaft chamber. Since the plate section also serves as the crankshaft chamber, the driving unit may have a simple construction.

### Advantageous Effects of Invention

In the stator fixation structure of this invention, the stator is accommodated in the tubular section including the inner wall with the first groove formed therein. The fixing member is pressed into the first groove. The fixing member presses a part of the outer wall of the stator. This causes the fixing member to press a part opposite to the part of the stator against the inner wall. A friction force is generated between the stator and the inner wall, thereby holding the stator. Consequently, the shifting of the stator along the central axis of the tubular section may be suppressed suitably.

The embodiment of this invention further includes the plate section projecting from outside of the tubular section. The first groove mentioned above is disposed on an inner wall opposite to the inner wall as the joining portion of the tubular section and the plate section. Consequently, the fixing member presses the stator against a part of the inner wall being reinforced by the plate section at the outside thereof. As noted above, the tubular section receives the load from the stator on a portion having a relatively high rigidity, making it difficult to deform the tubular section. As a result, the radial shifting of the stator relative to the central axis may be suppressed.

Thus, the stator fixation structure has a simple construction. In addition, the stator is fixed to the housing merely by pressing the fixing member into the first groove, resulting in an enhanced working efficiency Also, the stator may be fixed in a shorter period of time.

The driving unit according to the embodiment of this invention uses the stator fixation structure. This allows suitably suppressing the shifting of the stator along the central axis of the tubular section and the shifting radially relative to the central axis. Moreover, this achieves a simple construction of the driving unit. Furthermore, the stator may be fixed to the housing merely by pressing the fixing member into the first groove, resulting in an enhanced working efficiency and performance in a shorter period of time. Accordingly, an efficient assembly of the driving unit can be achieved.

### Brief Description of Drawings

Figure 1 is an external view of a driving unit according to one embodiment of this invention.
Figure 2 is a plan view of a principal part of the driving unit.
Figure 3 is a sectional view along the line A-A in Figure 1.
Figure 4 is a perspective view of a principal part of a housing.
Figure 5 is a perspective view of a principal part of a stator.
Figure 6 is an external perspective view of a spring pin.
Figure 7 is an exploded perspective view of a principal part of the driving unit.
Figure 8 is an enlarged sectional view of a stator fixation structure (1).
Figure 9 is a perspective view of a rear face of a cover.
Figure 10 is an enlarged sectional view of a stator fixation structure (2).
Figure 11 is a perspective view of a bent wire rod.
Figure 12 is a view of the bent wire rod, wherein Figure 12A illustrates a partial side view of the bent wire rod, and wherein Figure 12B illustrates a plan view of the bent wire rod.
Figure 13 is a left side view of a bicycle including the driving unit mounted thereon.

### Description of Embodiments

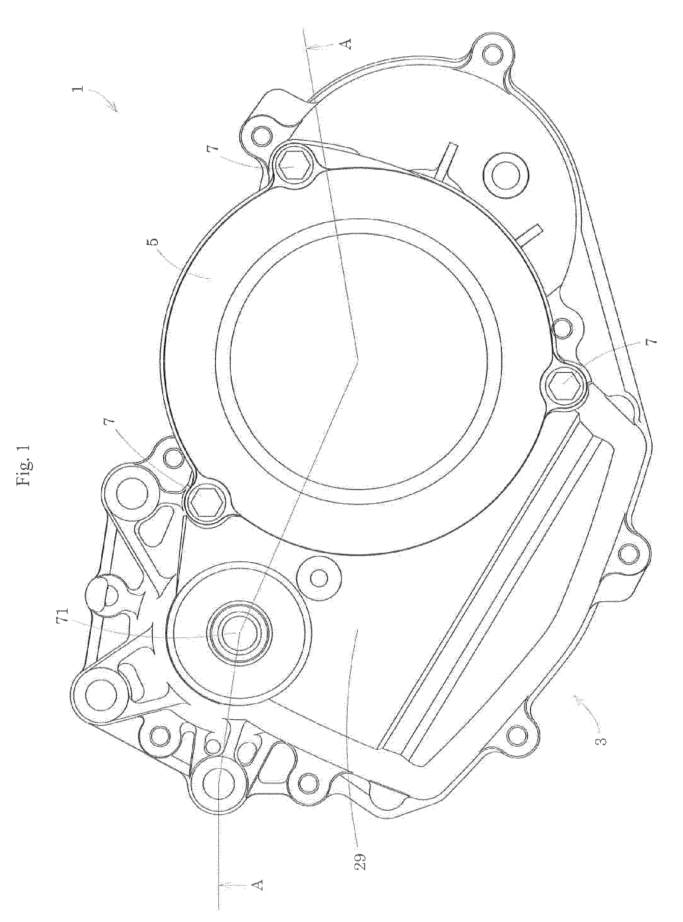

A description will be given hereinafter of embodiments of this invention with reference to drawings. A driving unit applicable to a bicycle is adopted for the description as one example of the embodiments. Figure 1 is an external view of a driving unit according to one embodiment of this invention.

### 1. Entire Construction of the Driving Unit

A driving unit 1 includes a housing 3 and a cover 5. The cover 5 is fastened to the housing 3 via bolts 7. A crankshaft 71 of a bicycle passes through the driving unit 1.

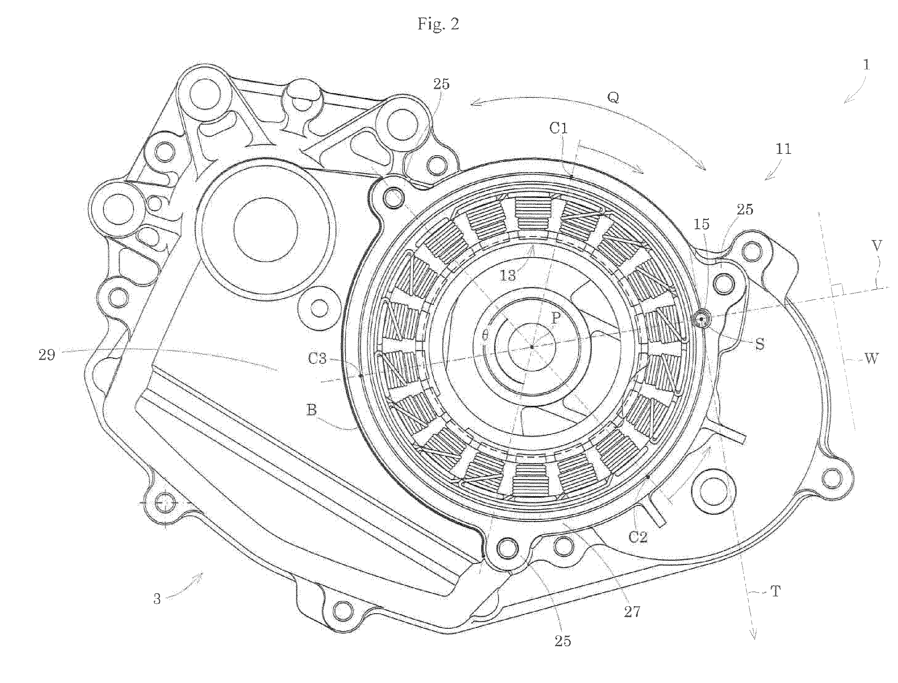

Figure 2 is a plan view of a principal part of the driving unit 1. In Figure 2, besides the cover 5 and the crankshaft 71 mentioned above, a rotor or the like is not shown. As illustrated, the housing 3 includes a tubular section 11 of substantially cylindrical shape. The tubular section 11 includes a stator 13 accommodated therein. A spring pin 15 is pressed into a gap between the tubular section 11 and the stator 13.

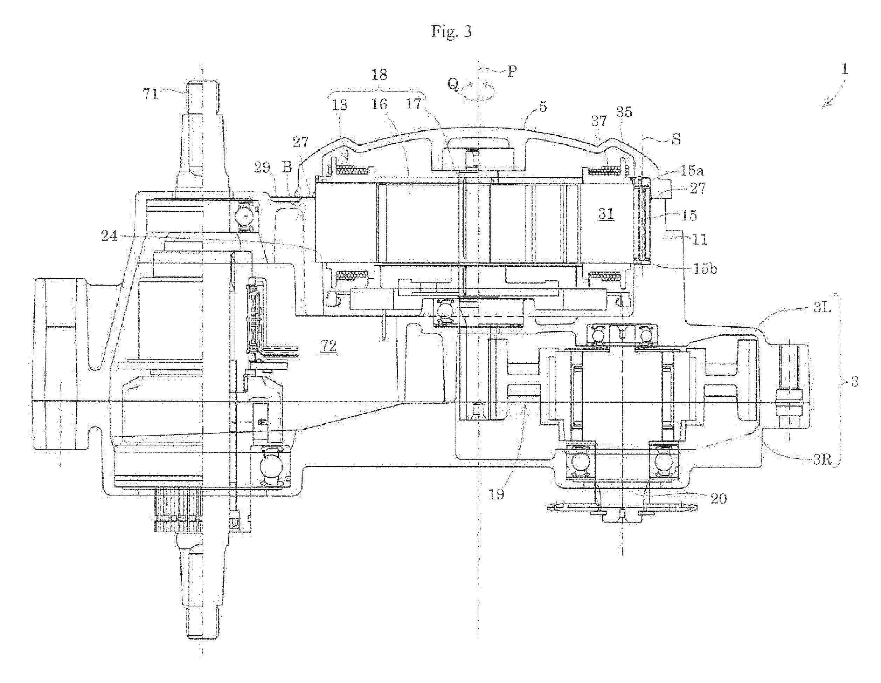

Reference is made to Figure 3. Figure 3 is a sectional view along the line A-A in Figure 1. As illustrated, a rotor 16 is disposed inside of the stator 13. The rotor 16 is connected to a rotary shaft 17 so as to rotate integrally therewith. The rotary shaft 17 is rotatably supported in the housing 3. The stator 13, the rotor 16, and the rotary shaft 17 constitute a motor 18 for generating power. The rotary shaft 17 is interlocked to an output shaft 20 via a gear unit 19 or the like. The output shaft 20 outputs power generated by the motor 18.

The cover 5 mentioned above blocks an upper opening of the tubular section 11. The cover 5 contacts an upper end surface 27 of the tubular section 11. The housing 3 includes a left case 3L and a right case 3R. The left and right cases are separable from each other. In the following description is made simply with respect to the housing 3 unless a difference needs to be made between the left case 3L and the right case 3R.

A description will be given hereinafter of each element. In the embodiment of this invention, the term "central axis P" is used throughout the specification for convenience assuming that the central axis P of the tubular section 11 substantially conforms to an axis of the stator 13. In addition, in the embodiment of this invention, a direction along the central axis P from the tubular section 11 toward the cover 5 is referred to as an "upward direction along the central axis P" or "upward" for convenience. For instance, an upper side of the plane of Figure 3 is referred to as an "upside direction along the central axis P" or simply as "upside", whereas a lower side of the plane of the drawing a "downside direction along the central axis P" or simply as "downside". In addition, a direction around the central axis P is referred to as a "peripheral direction Q".

### 2. Construction of the Housing

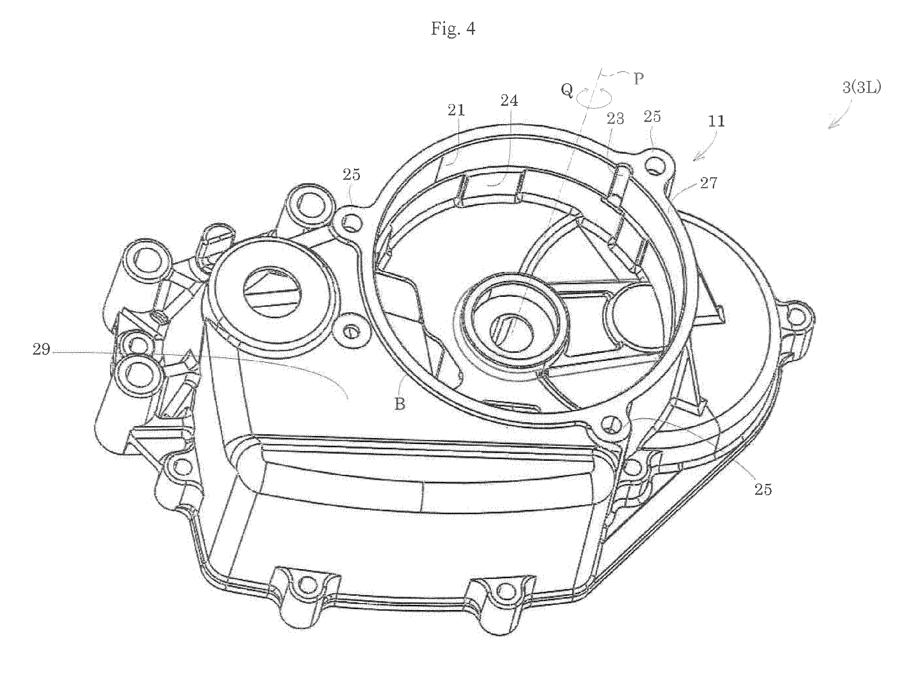

Figure 4 is a perspective view of a principal part of the housing 3. In Figure 4, only the left case 3L is illustrated and the right case 3R is omitted.

As illustrated, the tubular section 11 includes inside thereof an inner wall 21. The inner wall 21 has an internal diameter slightly larger than an external diameter of the stator 13, allowing accommodating the stator 13. The inner wall 21 includes a single first groove 23 formed thereon that is substantially parallel to the central axis P of the tubular section 11. The first groove 23 is substantially semicircular shape. In Figure 4, the first groove 23 is disposed at a position slightly different from that in Figure 2.

On lower ends of the inner wall 21 and the first groove 23, a flange 24 is provided which projects inwardly and radially relative to the central axis P (hereinafter is abbreviated to "radially" where appropriate). The flange 24 has an internal diameter smaller than an external diameter of the stator 13. A top surface of the flange 24 contacts a lower surface of the stator 13 to support the stator 13.

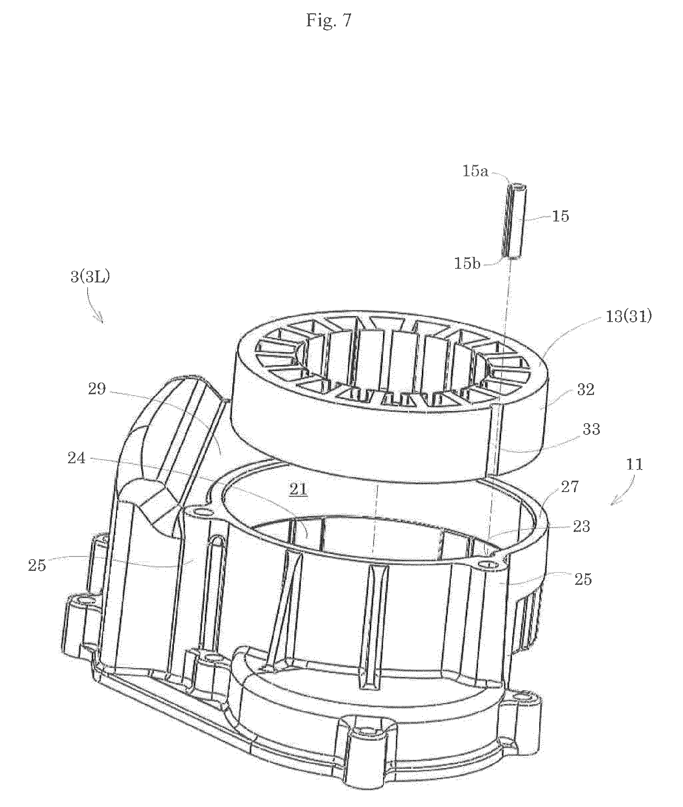

The tubular section 11 further includes a plurality of (e.g., three) bosses 25 for connecting the cover 5. The boss 25 projects radially and outwardly from the outside of the tubular section 11 (Figure 7, to be described later, illustrates clearly the shape of the bosses 25). A projecting area (i.e., an area where the boss 25 is formed along the central axis P) extends downwardly from the upper end surface 27 of the tubular section 11. The first groove 23 mentioned above is disposed adjacent to any of the bosses 25 in the peripheral direction Q.

The housing 3 further includes a plate section 29 projecting externally from the tubular section 11. The plate section 29 has a planar shape substantially orthogonal to the central axis P. The plate section 29 is joined to the outer surface of the tubular section 11. The plate section 29 is joined to the tubular section 11 in the peripheral direction Q not entirely but partially. The tubular section 11 has a rigidity (strength) that varies along the peripheral direction Q. Specifically, a portion of the tubular section 11 joined to the plate section 29 has a higher rigidity than that of the other portions, making it difficult to deform or bend this portion under a load. Hereinafter, the portion where the tubular section 11 is joined to the plate section 29 is referred to as a "joining portion B". In the following a detailed description of a position of the joining portion B will be given.

The joining portion B is disposed below the upper end surface 27 of the tubular section 11 along the central axis P, as is illustrated clearly in Figure 4. Moreover, as illustrated in Figure 3, the joining portion B is disposed above the lower end 15b of the spring pin 15 along the central axis P. In other words, the joining portion B is disposed so as to overlap the spring pin 15 along the central axis P. The plate section 29 serves as a wall forming a crankshaft chamber 72 into which the crankshaft 71 is inserted.

The joining portion B also extends over a larger area along the peripheral direction Q. Specifically, as illustrated in Figure 2, the joining portion B has a length in the peripheral direction Q of approximately one third of the entire periphery of the tubular section 11. In other words, assuming that the joining portion B is an arc around the central axis P, the joining portion B has a central angle of approximately 120 degrees.

The boss 25 is substantially parallel to the central axis P, and differs from the plate section 29. Moreover, a portion in the form of a root of the boss 25 (the joining portion of the boss 25 and the tubular section 11) is substantially parallel to the central axis P, whereas the joining portion B is substantially orthogonal to the central axis P. This is a difference between the boss 25 and the plate section 29. The area within which the boss 25 projects reaches the upper end surface 27 of the tubular section 11. This also is a difference between the boss 25 and the plate section 29.

The first groove 23 mentioned above is disposed in the peripheral direction Q within an area facing the joining portion B across the central axis P. Specifically, the area corresponds to an area on the inner wall 21 enclosed by points C1 and C2 in Figure 2. More preferably, the first groove 23 is disposed on an area of the inner wall facing the inner wall corresponding to a center portion of the joining portion B in the peripheral direction Q.

### 3. Construction of the Stator

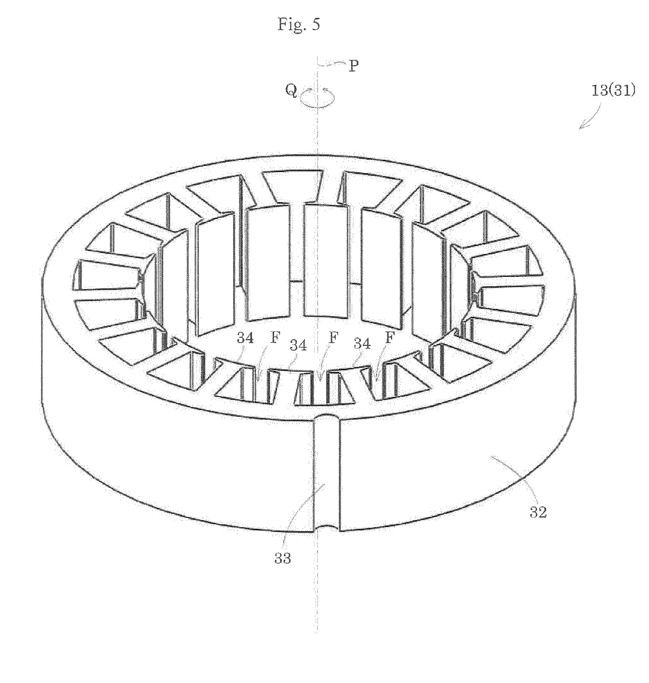

As illustrated in Figure 3, the stator 13 includes a stator core 31, insulated bobbins 35, and a coil 37. Figure 5 is a perspective view of a principal part of the stator. As illustrated, a second groove 33 is formed on an outer wall 32 of the stator core 31, the second groove 33 being substantially parallel to the central axis P. The second groove 33 is substantially semicircular shape. The stator core 31 further includes a plurality of teeth 34. A slot F is formed between adjacent teeth 34. The second groove 33 is disposed radially outside of the slot F.

### 4. Construction of the Spring Pin

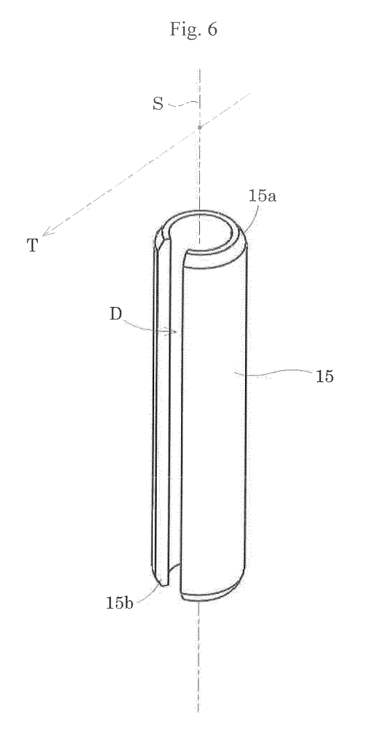

Figure 6 is an external perspective view of the spring pin 15. As illustrated, the spring pin 15 has substantially cylindrical shape, and includes a slit D parallel to a shaft axis S thereof. An upper end 15a and a lower end 15b of the spring pin 15 are chamfered. The ends are each tapered. When the spring pin 15 is compressingly deformed radially and inwardly toward the shaft axis S, the spring pin 15 exerts a elastic force radially and outwardly relative to the shaft axis S.

### 5. Stator Fixation Structure (1) with the Housing, the Stator and the Spring Pin

A description will be given in detail of a fixation structure (1) for use in the driving unit 1 according to one embodiment of this invention. Figure 7 is an exploded perspective view of a principal part of the driving unit 1. As illustrated, the stator 13 is firstly attached to the tubular section 11 such that the second groove 33 faces the first groove 23. This leads to the formation of a substantially circular gap by the first groove 23 and the second groove 33. Subsequently, the spring pin 15 is pressed into the gap.

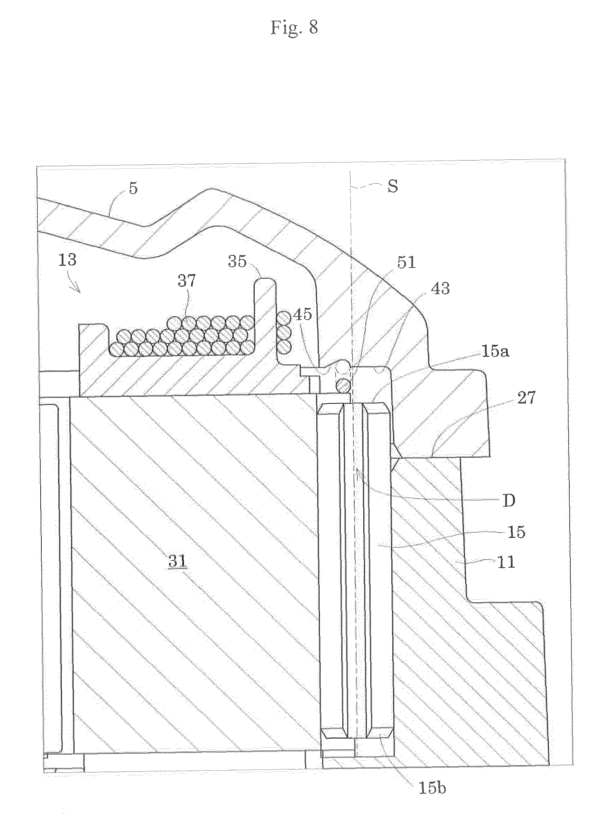

Reference is now made to Figure 8. Figure 8 is an enlarged sectional view of the stator fixation structure (1). As illustrated, the spring pin 15 has the shaft axis S substantially parallel to the central axis P, and is maintained compressingly deformed. The slit D becomes narrower as the spring pin 15 is compressingly deformed. However, the slit D is designed not to be blocked (i.e., the spring pin 15 is not closed) although the spring pin 15 is maintained compressingly deformed.

Reference is again made to Figure 2. The spring pin 15 is pressed while being adjusted such that a direction of the slit D conforms to a tangent line to the second groove 33 of the stator 13. More strictly speaking, assuming that a radial direction connecting the shaft axis S of the spring pin 15 to the slit D is a slit direction T (see also Figure 6), a radial direction relative to the central axis P through the shaft axis S is a radial direction V, and a direction orthogonal to the radial direction V is a tangent line direction W (see Figure 2), the spring pin 15 is disposed such that the slit direction T is substantially parallel to the tangent line direction W. In other words, the radial direction V relative to the central axis P through the shaft axis S of the spring pin 15 is substantially orthogonal to the direction T connecting the shaft axis S to the slit. This ensures exerting an elastic force of the spring pin 15 to the stator 13. In addition, a force direction of the spring pin 15 exerted to the stator 13 may substantially conform to a direction from the shaft axis S of the spring pin 15 toward the central axis P (i.e., the radial direction V). Moreover, the shaft axis S of the spring pin 15 is substantially parallel to the central axis P, and thus a variation in pressing the spring pin 15 against the stator 13 along the central axis P may be suitably suppressed. That is, the spring pin 15 may press the stator 13 by a substantially uniform force regardless of the position thereof along the central axis P.

The spring pin 15 presses the second groove 33 of the stator core 31 to press an opposite portion of the stator 13 against the inner wall 21. Specifically, the stator 13 is brought into surface contact with the inner wall 21 within an area extending in the peripheral direction Q around a point C3 where the radial direction V and the inner wall 21 intersect.

The inner wall 21 in surface contact with the stator 13 receives a load radially and outwardly relative to the central axis P. This causes a friction force between the stator 13 and the inner wall 21. The friction force allows holding the stator 13. That is, the shifting of the stator 13 along the central axis P may be suppressed suitably.

Moreover, the inner wall 21 in surface contact with the stator 13 serves as a joining portion B at the external surface (back face) thereof. As mentioned above, the portion of the tubular section 11 serving as the joining portion B has a higher rigidity than the other portion of the tubular section 11, and thus the tubular section 11 is difficult to deform and bend. Consequently, the radial shifting of the stator 13 along the central axis P may be suppressed suitably.

For instance, a comparative example in considered in which a first groove 23 is disposed at an opposite position to the above embodiment, i.e., a point C3. In this comparative example, the spring pin presses the stator 13 against a portion of the tubular section 11 away from the joining portion B (i.e., an area around the first groove 23 of the above embodiment). As mentioned above, the portion of the tubular section 11 facing away from the joining portion B is deformed more easily than the portion of the tubular section 11 serving as the joining portion B. If the portion is deformed, a diameter of the inner wall 21 in surface contact with the stator 13 increases relative to the central axis P. As a result, the stator 13 radially shifts as the tubular section 11 is deformed. As noted above, when compared to the comparative example, the fixation structure (1) of the embodiment allows suppressing the radial shifting of the stator 13.

In the fixation structure (1) of the embodiment, the first groove 23 receives a load radially and outwardly relative to the central axis P from the spring pin 15. On the other hand, an area of the first groove 23 receiving the load is smaller than that of the inner wall 21 receiving the load from the stator 13. That is, the inner wall 21 facing away from the first groove 23 in the peripheral direction Q receives no radial and outward load. The portions of the tubular section 11 on both beside the first groove 23 are subjected to a pulling force toward the first groove 23. The force does not act so as to efficiently expand and extend the diameter of the inner wall 21 in terms of its direction. Consequently, if the portion of the tubular section 11 corresponding to the first groove 23 is deformed to increase its diameter, the inner wall 21 on both beside the first groove 23 will not see an increase in its diameter. This also makes radial shifting of the stator 13 difficult. As noted above, in the fixation structure (1) of the embodiment, although the portion of the tubular section 11 corresponding to the first groove 23 is deformed, the stator 13 is difficult to shift radially.

Now a description of other characteristics of the fixation structure (1) will be given. Reference is now made to Figure 3. The top face of the stator 13(stator core 31) projects upward over the upper end surface 27 of the tubular section 11. Consequently, the tubular section 11 is designed to have a depth (i.e., a dimension from the upper end surface 27 to the top face of the flange 24) shorter than a dimension of the stator 13(stator core 31) along the central axis P.

The upper end 15a of the spring pin 15 does not project upward over the top face of the stator 13 (stator core 31). The spring pin 15 is designed to have a length shorter than the dimension of the stator 13 along the central axis P. Consequently, since the spring pin 15 does not project over the stator 13, an interference between the spring pin 15 and the stator 13 or other elements may be suitably suppressed. On the other hand, the spring pin 15 projects upward over the upper end surface 27 of the tubular section 11.

Moreover, in the fixation structure of the embodiment, the joining portion B is disposed so as to overlap the spring pin 15 along the central axis P. This allows suppressing a deformation of the tubular section 11.

Moreover, the spring pin 15 presses the outer wall 32 of the stator 13. Accordingly, although the stator 13 (stator core 31) may have some variations in dimension along the central axis P, the stator 13 may be pressed against the inner wall 21 with no influence of the variations.

Moreover, the elastically deformable spring pin 15 is adopted as the fixing member. Accordingly, although there may occur some variations in internal diameter of the inner wall 21 or in the dimension of the first groove 23 of the tubular section 11, in the external diameter of the stator 13 (stator core 31) or in the dimension of the second groove 33, the variations are absorbed to permit the stator 13 to be pressed against the inner wall 21 suitably. Furthermore, the spring pin 15 is a relatively compact elastic body. This achieves a reduction in size of the first groove 23 and the second groove 33. Consequently, a reduction in size of the tubular section 11 and the stator 13 may be achieved.

Moreover, the joining portion B has a length along the peripheral direction Q of approximately one-third of the entire periphery of the tubular section 11. This provides for an enhanced rigidity of the tubular section. This also increases the contact area of the stator 13 with the inner wall 21.

Moreover, the stator 13 includes the second groove 33. This allows the spring pin 15 to press the stator 13 suitably. This also suppresses, at the same time, the shifting of the stator 13 in the peripheral direction Q.

### 6. Construction of the Cover

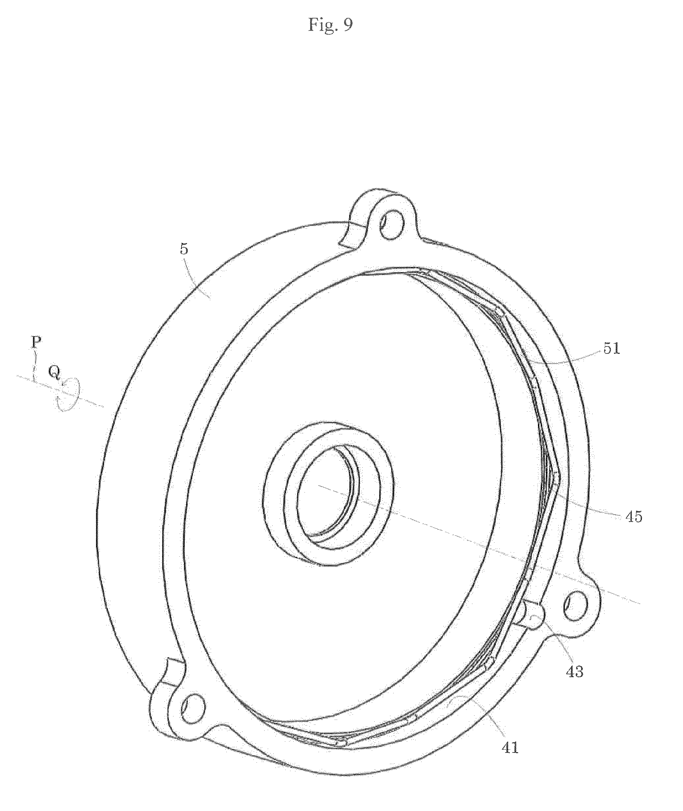

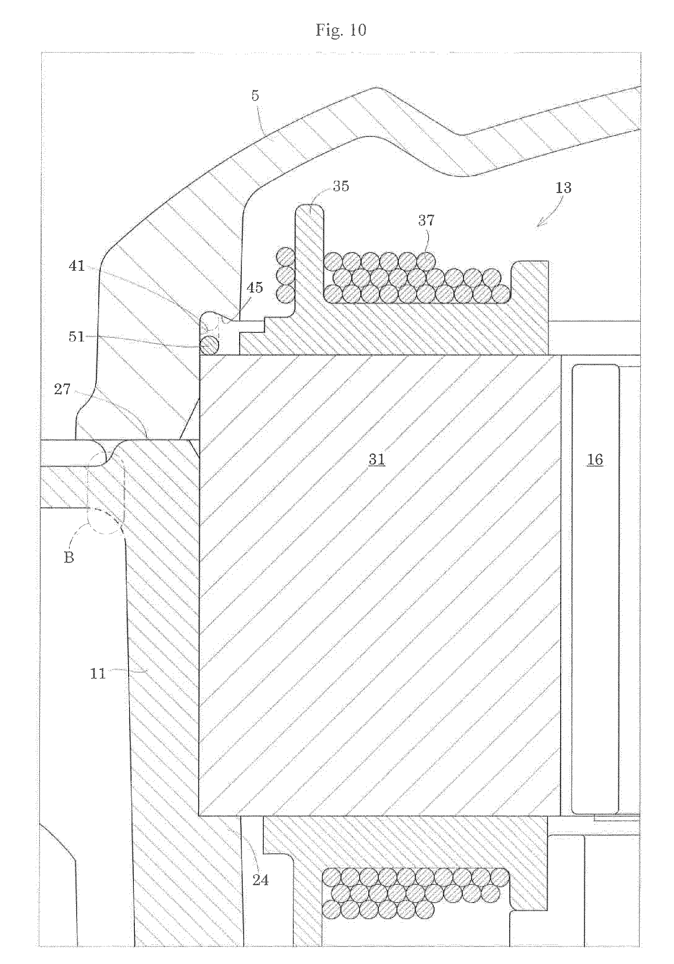

Description will be given next of the other elements of the driving unit 1 according to the embodiment of this invention. Reference is made to Figures 9 and 10. Figure 9 is a perspective view of the rear face of the cover 5. Figure 10 is an enlarged sectional view of the stator fixation structure (2). The rear face of the cover 5 includes a side wall 41 formed thereon. The side wall 41 is formed in the peripheral direction Q relative to the central axis P. The side wall 41 has an internal diameter slightly larger than the external diameter of the stator 13. The stator 13 (stator core 31) projecting from the tubular section 11 is accommodated inside the side wall 41. As noted above, the upper stator 13 is partially accommodated in the cover 5, facilitating a reduction in size of the driving unit 1.

As illustrated in Figures 8 and 9, the side wall 41 includes a notch 43 formed thereon. The notch 43 is disposed on an extended position of the first groove 23. The spring pin 15 is accommodated in the notch 43, the spring pin 15 projecting upward from the upper end surface 27 of the tubular section 11.

The cover 5 also includes a protrusion 45. The protrusion 45 projects radially and inwardly from an upper end of the side wall 41. The protrusion 45 is inclined downwardly along the central axis P toward inside of the central axis P radially. As a result, an annular recess (space) is formed between the side wall 41 and the protrusion 45.

### 7. Construction of the Bent Wire Rod

The driving unit 1 further includes a bent wire rod 51 between the cover 5 and the stator 13. The bent wire rod 51 rests on the side wall 41 and the protrusions 45 mentioned above. The bent wire rod 51 also contacts the periphery of the top face of the stator core 31 directly. The bent wire rod 51 applies an elastic force to the stator 13 downwardly along the central axis P.

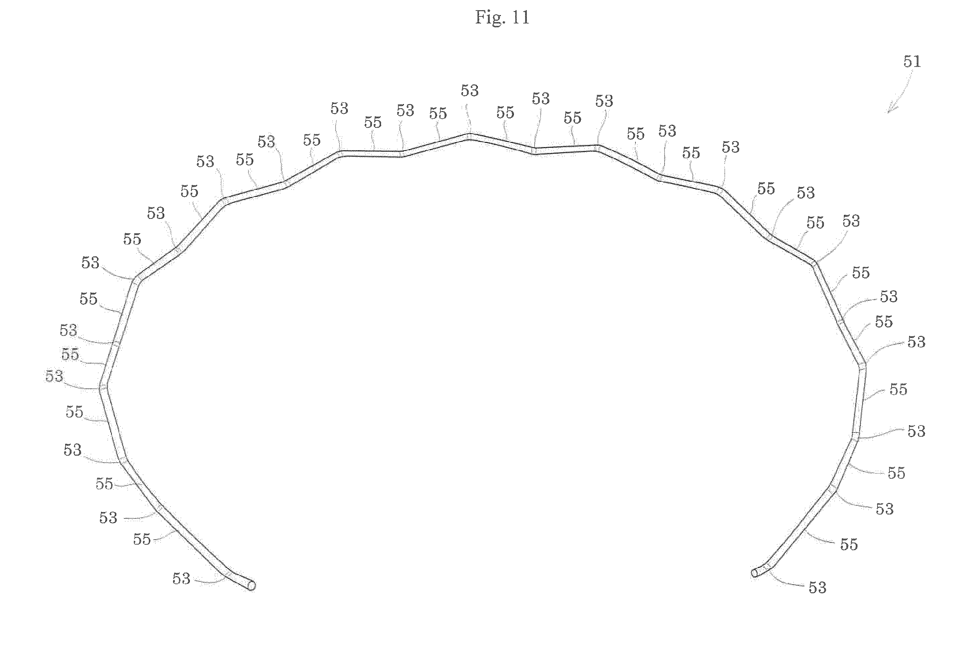

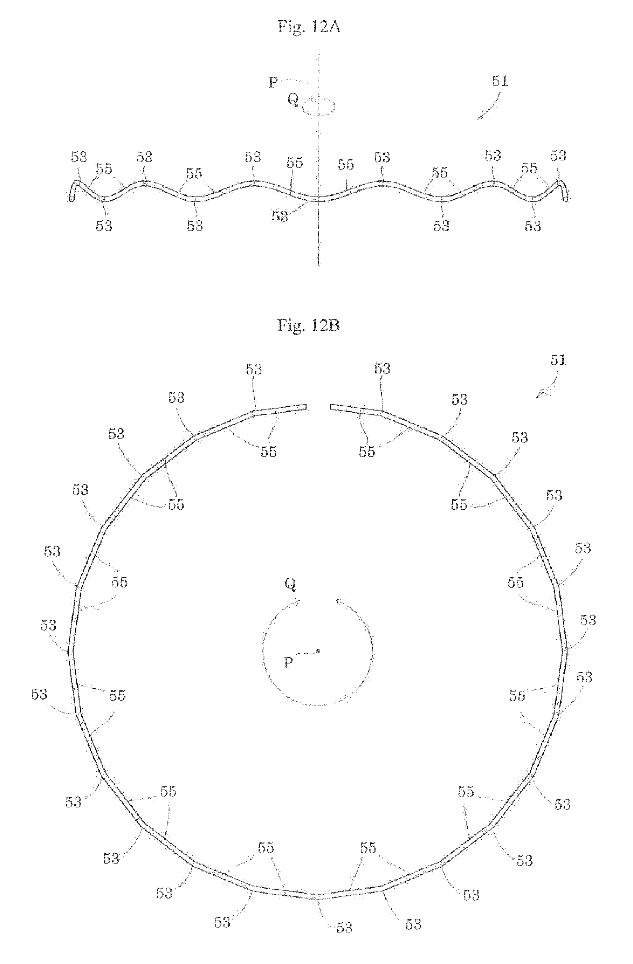

Reference is now made to Figure 11. Figure 11 is a perspective view of the bent wire rod 51. Figure 12A is a partial side view of the bent wire rod 51, and Figure 12B is a plan view of the bent wire rod 51. Figure 11 illustrates a bent wire rod 51 that is not compressingly deformed, whereas Figure 12 illustrates a bent wire rod 51 compressingly deformed between the cover 5 and the stator 13.

The bent wire rod 51 is composed of a single wire such as round steel. As illustrated in Figure 12A, the bent wire rod 51 includes a plurality of bent portions 53 and a plurality of straight portions 55. The bent portions 53 are formed by bending the wire so as to be zigzag with alternate projections and depressions being arranged successively and vertically along the central axis P in a side view. The straight portions 55 are formed by extending the wire rod straightly to connect the adjacent bent portions 53. Moreover, as illustrated in Figure 12B, the bent wire rod 51 bends at the bent portions 53 so as to have an outer shape of a polygon (e.g., equilateral icositetragon) in a plan view. The polygon has vertices formed by each of the bent portions 53 and an opened portion. The bent wire rod 51 is designed in advance so as to have an outer shape larger than the external diameter of the stator 13 in a plan view.

Thus, the bent wire rod 51 mentioned above has the bent portions 53 alternately projecting vertically along the central axis P. When the bent wire rod 51 is compressed along the central axis P, an elastic force is generated by which the bent wire rod 51 tends to expand along the central axis P to cause the bent wire rod 51 to return to its original shape. When the bent wire rod 51 is compressed radially and inwardly relative to the central axis P to have a smaller outer shape, an elastic force is generated by which the bent wire rod 51 that tends to expand radially and outwardly to cause the bent wire rod 51 to return to its original shape.

### 8. Stator Fixation Structure (2) with the Stator, the Cover and the Bent Wire Rod

A description will be given now of another fixation structure (2) used in the driving unit 1 according to the embodiment of this invention. As illustrated in Figure 9, the bent wire rod 51 is attached along the side wall 41 of the cover 5 while being compressed so as to have a smaller outer shape. The bent wire rod 51 generates a radially and outwardly directed elastic force. With the elastic force, the bent wire rod 51 expands in the peripheral direction of the side wall 41 to rest on the side wall 41. Subsequently, the cover 5 is fastened to the housing 3.

Reference is now made to Figure 10. When the cover 5 is connected to the housing 3, the bent portions 53 projecting downward along the central axis P contact the peripheral edge of the stator 13 (stator core 31). The bent portions 53 projecting upward along the central axis P contact the protrusions 45. The bent portions 53 are held while being compressed along the central axis P. Accordingly, the bent wire rod 51 exerts an elastic force to the stator 13 downwardly along the central axis P. That is, the bent wire rod 51 presses the stator 13 along the central axis P in a direction away from the cover 5. Consequently, the lower surface of the stator 13 is pressed against the flange 24.

Thus, the fixation structure (2) combined with the fixation structure (1) as described above further ensures to suppress the shifting of the stator 13 along the central axis P.

Moreover, as mentioned above, the spring pin 15 does not project over the stator 13 (stator core 31), thereby avoiding an interference between the spring pin 15 and the bent wire rod 51.

### 9. Exemplary Application to the Bicycle

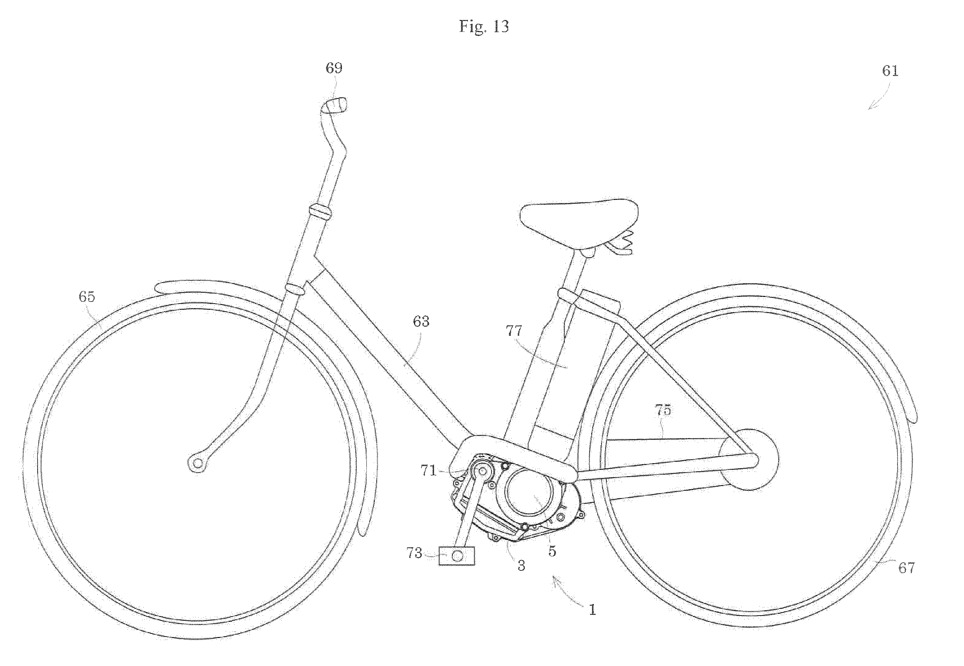

Next, a description of an exemplary application of the driving unit 1 according to the embodiment of this invention to a bicycle will be given. Figure 13 is a left side view of a bicycle 61 with the driving unit 1 mounted thereon. The bicycle 61 includes a vehicle frame 63, a front wheel 65 and a rear wheel 67 rotatably supported on the vehicle frame 63, and a handle 69 supported on the vehicle frame 63 and steering the front wheel 65.

The driving unit 1 is supported on the vehicle frame 63 around the lower middle portion of the bicycle 61. The driving unit 1 is provided such that the central axis P of the tubular section 11 is substantially horizontal. The driving unit 1 includes a crankshaft 71 passing therethrough substantially horizontally. The crankshaft 71 has pedals 73 coupled thereto on both ends thereof. Pressure on the pedals 73 causes the crankshaft 71 to rotate. The rotary power of the crankshaft 71 is transmitted to the rear wheel 67 via a chain 75. In addition, the vehicle frame 63 includes a battery 77 supported thereon. The battery 77 drives the motor 18 composed of the stator 13 and the like.

Reference is now made to Figure 3. The crankshaft 71 is inserted into the crankshaft chamber 72 of the driving unit 1. The crankshaft chamber 72 also includes a torque sensor (not shown) that detects a torque of the crankshaft 71, and a controller (not shown) that controls the motor 18. Power from the motor 18 is output to an output shaft 20. The rotary power from the output shaft 20 may be transmitted to the rear wheel 67 via the chain 75 mentioned above.

The controller controls the motor 18 in accordance with detection results from the torque sensor. The motor 18 generates power in accordance with the pressure on the pedals 73. The pressure and the power from the motor 18 are transmitted to the chain 75 via the crankshaft 71 and the output shaft 20, respectively. The chain 75 combines the pressure and the power to transmit the combined pressure and power to the rear wheel 67. This causes the bicycle 61 to move.

In the bicycle 61, the pedals 73, sometimes, may contact the ground. The pedals 73 are coupled to the crankshaft 71. Accordingly, in general, the surface of the driving unit (the outer surface of the housing) of the bicycle 61 may undergo a direct shock, or the interior of the driving unit (crank chamber) may undergo a direct shock through the crankshaft. When the shock is directly transmitted to the inside of the driving unit, a stronger force is transmitted to the stator along the central axis P. On the other hand, in the driving unit 1 according to the embodiment of this invention, the fixation structure(s) (1) or/and (2) mentioned above of the stator 13 is/are used. This allows suitably suppressing the shifting of the stator 13 along the central axis P. Consequently, the driving unit 1 according to the embodiment of this invention is suitable for the application to the bicycle 61.

This invention is not limited to the above embodiment, but may be modified as follows.
(1) The embodiment mentioned above use both of the fixation structures (1) and (2). Alternatively, the fixation structure (2) may be omitted.
(2) In the embodiment mentioned above, the stator 13 includes the second groove 33. Alternatively, the second groove 33 may be omitted. In this case, the spring pin 15 may be modified to be pressed into the first groove 23 only. Such the modification allows the spring pin 15 to press the stator 13 against the inner wall 21 suitably, achieving a suitable prevention of the stator 13 from shifting along the central axis P.
(3) In the embodiment mentioned above, the gap formed by the first groove 23 and the second groove 33 has a substantially circular shape, but the shape of the gap is not limited to this. For instance, the gap may be made substantially rectangular or elliptic.
(4) In the embodiment mentioned above, the joining portion B has a length in the peripheral direction Q of approximately one-third the entire periphery of the tubular section 11, but the invention is not limited to this embodiment. That is, the length may be changed appropriate. For instance, the joining portion B has a length in the peripheral direction Q of approximately one-third or more, or of approximately one-third or less. Alternatively, the joining portion B has a length in the peripheral direction Q of one-fourth or more.
(5) In the embodiment mentioned above, the plate section 29 serves as the wall of the crankshaft chamber 72, but the invention is not limited to this embodiment. The plate section 29 may be modified so as to have other functions. Alternatively, the plate section 29 may be modified to simply form the joining portion B to have only a function of enhancing the rigidity of the tubular section 11.
(6) In the embodiment mentioned above, the second groove 33 is disposed radially outside of the slot F, but the invention is not limited to this embodiment. The second groove 33 may be modified and selected as appropriate. For instance, the second groove 33 may be disposed radially outside of the teeth 34.
(7) The embodiment mentioned above describes as one example the spring pin 15 in the form of the fixing member. The invention is, however, not limited to this embodiment. For instance, the fixing member may be modified in the form of a rigid body with no elasticity. Specifically, the fixing member may be modified in the form of a wedge, a tapered pin, a parallel pin, or the like. In addition, the shape of the pin is not limited to be cylindrical. For instance, the shape may be modified into a columnar shape as such a polygonal column or a conical shape such as a cone or a pyramid.
(8) The embodiment mentioned above is applicable not only to the driving unit 1 used in the bicycle 61 but also to any other device. The crankshaft chamber 72 may be omitted with the modification above.
(9) In the embodiment mentioned above, the stator 13 has been described as one example of an element of the motor 18, but the invention is not limited to this embodiment. For instance, the embodiment of this invention is applicable to the stator 13 constituting a generator.
(10) In the embodiment mentioned above, the bent wire rod 51 has been described as one example of the elastic member, but the invention is not limited to this embodiment. The bent wire rod 51 may be another type of elastic body or a machine element such as a spring.
(11) The embodiment and modifications (1) to (10) mentioned above may be modified as appropriate. For instance, each construction may be modified as appropriate by replacing or combining it with another construction of the modifications.

### Reference Signs List

- 1: driving unit
- 3: housing
- 5: cover
- 11: tubular section
- 13: stator
- 15: spring pin (fixing member)
- 16: rotor
- 18: motor
- 21: inner wall
- 23: first groove
- 25: boss
- 27: upper end surface
- 29: plate section
- 31: stator core
- 32: outer wall
- 33: second groove
- 51: bent wire rod (elastic member)
- 61: bicycle
- 71: crankshaft
- 72: crankshaft chamber
- 73: pedal
- B: joining portion
- P: central axis
- Q: peripheral direction
- S: shaft axis
- T: slit direction
- V: radial direction of a central axis through a shaft axis of a spring pin
- W: tangent line direction

## Claims

1. A stator fixation structure, comprising:
a stator;
a housing including a tubular section with a first groove on an inner wall thereof, the stator being accommodated in the tubular section; and
a fixing member for fixing the stator to the housing, the fixing member being pressed into the first groove to press the stator against the inner wall of the tubular section,
the housing further including a plate section having a planar shape substantially orthogonal to a central axis of the tubular section and projecting from an outer surface of the tubular section, and
the first groove being disposed in a peripheral direction of the tubular section within an area facing a joining portion across the central axis, the tubular section and the plate section being joined at the joining portion.

2. The stator fixation structure according to claim 1, wherein
the joining portion overlaps the fixing member along the central axis.

3. The stator fixation structure according to claim 1 or 2, wherein
the joining portion is disposed below an upper end surface of the tubular section along the central axis.

4. The stator fixation structure according to any of claims 1 to 3, wherein
the joining portion has a length along the peripheral direction of the tubular section of one-fourth or more of an entire periphery of the tubular section.

5. The stator fixation structure according to any of claims 1 to 4, wherein
the fixing member has a columnar shape, and is pressed into the first groove with a shaft axis of the fixing member being parallel to the central axis.

6. The stator fixation structure according to claim 5, wherein
the fixing member is cylindrical.

7. The stator fixation structure according to claim 5 or 6, wherein
the fixing member is a spring pin with a slit formed therein.

8. The stator fixation structure according to claim 7, wherein
a radial direction relative to the central axis through the shaft axis of the spring pin is substantially orthogonal to a direction of a line connecting the shaft axis and the slit.

9. The stator fixation structure according to any of claims 1 to 8, wherein
the fixing member has a length shorter than that of the stator along the central axis.

10. The stator fixation structure according to any of claims 1 to 9, wherein
the stator includes a second groove on an outer wall thereof, and is accommodated in the tubular section such that the second groove faces the first groove, and
the fixing member is pressed into a gap formed by the first groove and the second groove.

11. The stator fixation structure according to any of claims 1 to 10, further comprising:
a cover coupled to the housing for blocking an opening of the tubular section; and
an elastic member disposed between a top face of the stator and a rear face of the cover for pressing the stator along the central axis and away from the cover.

12. The stator fixation structure according to claim 11, wherein
the tubular section includes a plurality of bosses projecting radially and outwardly from an upper end surface thereof, for connecting the cover, and
the first groove is disposed adjacent to one of the bosses.

13. The stator fixation structure according to claim 11 or 12, wherein
the top face of the stator projects above the upper end surface of the tubular section, and
the cover includes inside thereof a notch formed on an extended position of the first groove.

14. A driving unit, comprising;
a motor configured to generate power, the motor including the rotor and the stator on the outer periphery of the rotor;
a housing including the tubular section, the motor being accommodated in the tubular section, the tubular section including a first groove on the inner wall thereof; and
a fixing member configured to fix the stator to the housing, the fixing member being pressed into the first groove to press the stator against the inner wall of the tubular section,
the housing further including a plate section having a planar shape substantially orthogonal to a central axis of the tubular section and projecting from an outer surface of the tubular section, and
the first groove being disposed in a peripheral direction of the tubular section within an area facing a joining portion across the central axis, the tubular section and the plate section being joined at the joining portion.

15. The driving unit according to claim 14, wherein
the driving unit is mountable on a bicycle,
the housing further includes a crankshaft chamber into which a crankshaft of the bicycle is inserted, and
the motor generates power for assisting a pressure of pedals coupled to the crankshaft.

16. The driving unit according to claim 15, wherein
the plate section is a wall for forming the crankshaft chamber.
